# EUROPÄISCHE PATENTSCHRIFT

(11) **EP 0 398 462 B1**
(45) Veröffentlichungstag und Bekanntmachung des Hinweises auf die Patenterteilung: **18.08.1993**
(21) Anmeldenummer: 90250131.1
(22) Anmeldetag: 18.05.1990
(51) Int. Cl.: G01N 21/67, G01J 3/443, G01N 21/62, G01N 21/31

(54) **Verfahren und Vorrichtung für die optische Funkenemissionsspektrometrie**
Procedure and equipment for optical spark-emission spectrometry
Procédé et dispositif pour la spectrométrie d'émission optique à étincelles

(30) Priorität: 19.05.1989 DE 3916833
(43) Veröffentlichungstag der Anmeldung: 22.11.1990
(73) Patentinhaber: OBLF Gesellschaft für Elektronik und Feinwerktechnik mbH, 58454 Witten (DE)
(72) Erfinder: Overkamp, Hans-Theo Bringfried, D-5810 Witten (DE)
(74) Vertreter: Patentanwälte Wenzel & Kalkoff

(56) Entgegenhaltungen:
- DE-A- 2 705 815
- US-A- 3 672 774
- US-A- 3 815 995

## Beschreibung

Die Erfindung betrifft ein Verfahren für die optische Funkenemissionsspektrometrie, bei dem in einer Abfunkkammer ein Funkenplasma von einer Probe erzeugt und mittels eines mit der Abfunkkammer über einen Verbindungsraum insbesondere optisch verbundenen Spektralapparates spektralanalytisch ausgewertet wird, wobei der Verbindungsraum und die Abfunkkammer während eines Abfunkvorganges kontinuierlich über eine Gaszuleitung von einem Schutzgas durchströmt werden, so daß die Strahlung des Funkenplasmas zum Spektralapparat in reiner Schutzgasatmosphäre stattfindet. Die Erfindung ist ferner auf eine Vorrichtung zur Durchführung des Verfahrens gerichtet.

Es ist bekannt, daß bei der optischen Emissionsspektrometrie mit Funkenanregung die vom Funken ausgehende Strahlung spektral zerlegt und die Intensitäten gemessen werden. Aus den Intensitäten der für die chemischen Elemente charakteristischen Wellenlängen lassen sich die Konzentrationen dieser chemischen Elemente in der abgefunkten Probe ermitteln. Dabei wird der elektrische Funkenübergang bzw. das Funkenplasma zwischen der Probe und einer Gegenelektrode überwiegend in einer Abfunkkammer erzeugt, in der eine reine Schutzgasatmosphäre herrscht, um eine Beeinträchtigung der Analyse vor allem durch Sauerstoff und Feuchtigkeit aus der umgebenden Luft zu vermeiden.

Während eines Abfunkvorganges strömt das Gas kontinuierlich aus der Richtung des Spektralapparates in die Abfunkkammer und hält diese dadurch frei von dem bei dem Abfunkvorgang entstehenden Abbrand, während die Strahlung, nämlich das Licht der Funken, durch den Gasstrom hindurch in den Spektralapparat gelangt.

Die Funktionsfähigkeit und die analytische Sicherheit des Verfahrens hängt sehr wesentlich davon ab, daß das in die Abfunkkammer strömende Gas insbesondere frei von Sauerstoff- und Wasserdampfanteilen ist, wie oben bereits erläutert wurde, und daß das Gas den Plasmabereich mit einer genau definierten Strömungsgeschwindigkeit spült, die konstant zu halten ist.

Es ist bekannt, die Reinheit der Schutzgasatmosphäre bei dem eingangs genannten Verfahren dadurch herbeizuführen, daß auch in der Bereitschaftszeit der Vorrichtung, in der also nicht abgefunkt wird, ständig ein sog. Ruhegasanteil über die Gaszuleitung mit relativ niedriger Strömungsgeschwindigkeit zuzuführen, so daß sämtliche Komponenten des Gassystems durch die Ruhegasströmung ständig vor dem Eindringen von Sauerstoff und Feuchtigkeit aus der umgebenden Luft geschützt sind.

Während des Abfunkvorganges geht man von der Ruhegasströmung auf die vorgegebene kontinuierliche Gasströmung für den Abfunkvorgang über, deren Durchflußgeschwindigkeit größer ist als die der Ruhegasströmung. Diese höhere Durchflußgeschwindigkeit ist optimal auf die jeweiligen analytischen Bedingungen abgestimmt. Dadurch ist sie aber immer so gering, daß sich viel Abbrand der Probe in der Abfunkkammer absetzt, so daß diese von Zeit zu Zeit gereinigt werden muß. Bei hoher Meßdichte können ohne weiteres zwei Reinigungen der Abfunkkammer pro Tag erforderlich sein. Für die Reinigung ist die Vorrichtung stillzusetzen. Außerdem kann eine Abfunkkammer bei zunehmender Verschmutzung eine Rekalibrierung des Spektralapparates erfordern.

Bei der Durchführung der Spetralanalyse wird zunehmend eine Automatisierung des Verfahrensablaufs gewünscht.

Hierfür sollen geeignete Geräte die notwendigen Voraussetzungen schaffen. Diesen Automatisierungsbemühungen steht entgegen, daß die Abfunkkammer bei Erreichen einer bestimmten Verschmutzung von Grund auf gereinigt und hierfür in ihre Bauteile zerlegt werden muß. Eine Automatisierung der Reinigung würde einen sehr hohen Aufwand erfordern. Schließlich bedingt die Reinigung der Abfunkkammer auch stets eine Unterbrechung des automatischen Verfahrensablaufes und hat darüber hinaus auch immer eine Änderung der Konditionierung derselben zur Folge. Hieraus können sich falsche Analysenwerte ergeben, so daß eine zusätzliche Rekalibrierung zwecks Korrektur unerläßlich ist. Auch durch diesen Vorgang wird der automatische Ablauf im Prüflabor unterbrochen.

Schließlich ist auch darauf hinzuweisen, daß im Zuge immer weiter fortschreitender Qualitätskontrollen auch kleinere Unternehmen z.B. in der Kraftfahrzeugzulieferindustrie die chemische Zusammensetzung ihrer Produkte oder auch ihrer Einsatzstoffe selber untersuchen und dafür optische Funkenemissionsspektrometer einsetzen. Dabei fallen häufig nur wenig Analysen pro Tag an, so daß der größte Anteil des Verbrauches an Schutzgas auf das in der Bereitschaftszeit zugeführte Ruhegas anfällt, und die Kosten für die einzelne Analyse folglich unerwünscht ansteigen. In der Regel besteht das recht teure Schutzgas aus hochreinem Argon.

Es besteht daher die Aufgabe, bei dem eingangs genannten Verfahren die Reinigung der Abfunkkammer zu vereinfachen und ggf. auch den Schutzgasbedarf zu senken.

Ausgehend von dem zu Beginn dargelegten Verfahren besteht die erfindungsgemäße Lösung dieser Aufgabe darin, daß in dem Gassystem vor der Abfunkkammer ein Spüldruck aufgebaut und z.B. vor Beginn des nächstfolgenden Abfunkvorganges zum Spülen der Abfunkkammer schlagartig frei gegeben wird, so daß das Spülgasvolumen die Abfunkkammer impulsartig durchflutet. Diese Reinigung der Kammer läßt zu, daß die Gasströmung in der Bereitschaftszeit unterbrochen ist, um den Gasverbrauch durch Verzicht auf die Ruhegasströmung zu senken.

Abweichend vom Stand der Technik wird folglich die Gasströmung, nämlich die bisher benutzte Ruhegasströmung durch Absperrung vor der Abfunkkammer für die Dauer der Bereitschaftszeit vorzugsweise gänzlich unterbrochen. Stattdessen hält man die vor der Abfunkkammer liegenden Komponenten des Gassystems, üblicherweise also die Gaszuleitung und den Verbindungsraum, unter Spüldruck, der sich im wesentlichen verlustfrei im Gassystem halten läßt, und gibt den Spüldruck vorzugsweise erst vor Beginn des nächstfolgenden Abfunkvorganges in der Weise schlagartig frei, daß das angesammelte Gasvolumen die Abfunkkammer nach Art einer Impulsspülung durchflutet und dabei einer intensiven Reinigung unterzieht. Da vorzugsweise jedem Abfunkvorgang eine solche Impulsspülung vorausgeht, können sich keine nennenswerten Abbrandablagerungen in der Abfunkkammer bilden. Da sich der Spüldruck innerhalb kürzester Zeit nach Unterbrechung des Zugangs zur Abfunkkammer aufbaut und darüberhinaus das bei einer solchen Impulsreinigung verbrauchte Spülgasvolumen vergleichsweise gering ist, kann eine Spülung der Abbrandkammer bei Bedarf auch zusätzlich unmittelbar im Anschluß an eine abgeschlossene Messung durchgeführt werden.

Das erfindungsgemäße Verfahren gestattet eine wesentliche Reduzierung des Gasverbrauchs, da die ständige Ruhegasströmung in der Bereitschaftszeit gänzlich entfallen kann. Daher ist die Reduzierung auch dort am größten, wo der Ruhegasanteil im Verhältnis zum Gasanteil während der Abfunkvorgänge relativ hoch ist. Man kann auf diesen Vorteil jedoch auch verzichten und nur die erfindungsgemäße Spülung der Kammer benutzen, so daß eine Unterbrechung des Gasstroms nur kurzzeitig für den Aufbau des Spüldrucks erfolgt oder die Spülung über einen zusätzlichen Gasanschluß an der Kammer durchgeführt wird.

Ein sehr wesentliches Ergebnis der Erfindung besteht in der Vereinfachung der Reinigung der Abfunkkammer durch Fortfall der bisher erforderlichen Reinigungsarbeiten und der damit einhergehenden Unterbrechung der Analysen. Die regelmäßige Spülung der Abfunkkammer z.B. vor jedem Abfunkvorgang erhöht die Qualität der Analysenergebnisse und vermeidet zusätzliche Rekalibrierungen durch eine beginnende oder bereits zunehmende Verschmutzung der Abfunkkammer. Sämtliche Komponenten des Gassystems, die vor der Abfunkkammer liegen, stehen in der Bereitschaftszeit ständig unter Überdruck bzw. dem Spüldruck, so daß keine Luft eindringen kann und ein Spülen dieses Bereiches überflüssig ist.

Wenn der Spüldruck am Einlaß der Abfunkkammer schlagartig freigegeben wird, strömt das Spülgasvolumen mit sehr hoher, impulsartiger Strömungsgeschwindigkeit in die Abfunkkammer ein, so daß beim Probenwechsel in die Abfunkkammer eingedrungene Luft ebenso beseitigt und aus der Kammer herausgetragen wird wie der beim letzten Abfunkvorgang in der Kammer abgesetzte Abbrand. Es versteht sich von selbst, daß diese Impulsreinigung durch Spülung der Kammer unter hohem Druck die Voraussetzungen für die Automatisierung der Spektrometrie sehr wesentlich verbessert. Eine Unterbrechung des automatischen Ablaufs ist mit der Reinigung der Kammer nicht mehr verbunden.

Alternativ zu einer Unterbrechung der Gasströmung unmittelbar vor der Abfunkkammer kann in Betracht gezogen werden, die Gasströmung bereits vor dem Verbindungsraum zu unterbrechen und die Spülung auch in dem Verbindungsraum wirksam werden zu lassen. Aber die Notwendigkeit der Reinigung durch Spülung besteht primär für die Abfunkkammer, so daß bereits unter diesem Gesichtspunk eine Impulsspülung auch des Verbindungsraumes nicht vordringlich erscheint, und die Intensität der Reinigungswirkung des Spülgasstroms in der Abfunkkammer kann sich verschlechtern, wenn das Spülgasvolumen zunächst den Verbindungsraum durchflutet und erst von hier in die Abfunkkammer übertritt. Deshalb wird erfindungsgemäß bevorzugt, daß der Spüldruck im Gassystem auch bereits in dem Verbindungsraum aufgebaut wird und in voller Höhe unmittelbar vor der Abfunkkammer ansteht.

Nach einer weiteren Alternative kann der Spüldruck durch Sperrung des Auspuffs der Abfunkkammer aufgebaut werden, so daß bei der Freigabe des Spüldrucks das im Gassystem, einschließlich Verbindungsraum und Abfunkkammer, gespeicherte Spülgasvolumen schlagartig durch den Auspuff entweicht und alle Verunreinigungen insbesondere der Kammer mit sich reißt.

Nach einer zusätzlichen Alternative kann der Spüldruck in einer Nebenleitung der Gaszuleitung herrschen und über diese Nebenleitung auf die Abfunkkammer wirksam werden, und zwar vorzugsweise kurz bevor auch die kontinuierliche Gasströmung, auch Arbeitsgasströmung genannt, wieder einsetzt, gleichgültig, ob noch mit oder ohne Ruhegasströmung gearbeitet wird. Ob hierdurch eine weitere Verbesserung möglich ist, hängt von den jeweiligen Umständen und der Art des Spektrometers ab.

Eine nach der Erfindung zur Durchführung des vorbeschriebenen Verfahrens gestaltete Vorrichtung in Form eines Spektrometers ist dadurch gekennzeichnet, daß die Abfunkkammer mit einem Einlaß für das Spülgas und für die während eines Abfunkvorganges kontinuierliche Gasströmung versehen ist, welcher Einlaß mittels eines schlagartig zu öffnenden Absperrorgans gasdicht verschließbar ist. Das Schließen dieses Absperrorgangs nach Abschluß eines Abfunkvorganges sowie das spätere Öffnen beim nächstfolgenden Abfunkvorgang wird zweckmäßig automatisch durch ein vorgegebenes Programm gesteuert. Wesentlich ist das schlagartige Öffnen des Absperrorgans zur Freigabe des Spüldrucks, damit das Spülgasvolumen mit impulsartiger Strömungsgeschwindigkeit in die Abfunkkammer ein- und durch diese hindurch strömen kann, um die gewünschte intensive Reinigung ohne Rückstände an Abbrand oder zwischenzeitlich eingedrungener Luft in der Kammer zurückzulassen. Unmittelbar im Anschluß an das schlagartige Abfließen des Spülgasvolumens stellt sich eine Normalisierung des Gasflusses für die übliche kontinuierliche Gasströmung während des Abfunkvorganges ein.

Es ist möglich, daß für das Spülgas eine Nebenleitung an die Abfunkkammer angeschlossen ist und jeweils ein Einlaß und ein Absperrorgan für das Spülgas und für die kontinuierliche Gasströmung vorgesehen sind, die kurz hintereinander zu betätigen sind, gleichgültig, ob es sich nur um die sog. Arbeitsgasströmung oder auch zusätzlich noch um die Ruhegasströmung handelt. Durch entsprechende Steuerung zu vermeiden ist in diesem Fall, daß der Spüldruck über die Kammer auch auf die Hauptleitung wirksam wird.

Für einen optimalen Ablauf des erfindungsgemäßen Verfahrens ist anzustreben, daß die Lage und Größe des Einlasses für das Spülgas sowie die innere Form der Abfunkkammer so gewählt sind, daß der Spülgasstrom den Kammerinnenraum vollständig ausfüllt und etwaige Ablagerungen auf der Kammerinnenwandung sowie etwaige Luftanteile durch den Gasspülstrom erfaßt und entfernt werden.

Es ist schließlich vorteilhaft, wenn der Einlaß für die während eines Abfunkvorgangs kontinuierliche Gasströmung in die Abfunkkammer gleichzeitig die Öffnung für den Strahlengang zwischen der Abfunkkammer und dem Spektralapparat bildet. Auf diese Weise hat die Strahlung nach Öffnung des den Einlaß verschließenden Absperrorgans direkten Zugang zu dem Spektralapparat durch die in dem Verbindungsraum herrschende Gasströmung hindurch. Nach Abschluß eines Abfunkvorganges entfällt die Strahlung und damit die Notwendigkeit für einen freien Zugang zu dem Spektralapparat, so daß mit dem Schließen des Einlasses für die Gasströmung auch die Öffnung für den Strahlengang verschlossen werden kann.

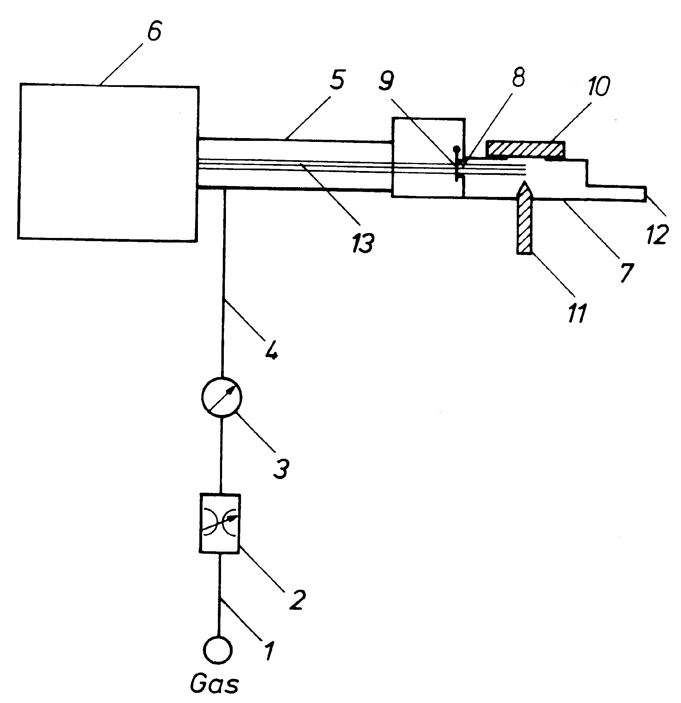

Ein Ausführungsbeispiel des erfindungsgemäßen Verfahrens wird nachstehend anhand eines Beispiels einer erfindungsgemäßen Vorrichtung näher erläutert. Diese Vorrichtung ist in der Zeichnung rein schematisch dargestellt, da die genaue Ausbildung eines Spektrometers dem Fachmann hinlänglich bekannt ist.

Das Gas, beispielsweise hochreines Argon, strömt von einem Gaseinlaß 1 durch ein zur Strömungsregulierung vorgesehenes Ventil 2 und durch einen Strömungsmesser 3 über eine Zuleitung 4 in einen Verbindungsraum 5, der gewöhnlich als Rohr ausgebildet und zwischen einem Spektralapparat 6 und einer Abfunkkammer 7 angeordnet ist. An der dem Verbindungsraum 5 zugewandten Seite weist die Abfunkkammer 7 einen Einlaß 8 für die Gasströmung auf, der mittels eines schnell zu öffnenden Absperrorgans 9, beispielsweise eines Klappenventils, verschließbar ist.

Während eines Abfunkvorganges ist das Absperrorgan 9 geöffnet, und das Gas strömt kontinuierlich von der Zuleitung 4 über den Verbindungsraum 5 in die Abfunkkammer 7. Es durchströmt hier das Funkenplasma, das sich während des Abfunkvorganges zwischen einer Probe 10 und einer Gegenelektrode 11 bildet, mit der im Ventil 2 eingestellten Strömungsgeschwindigkeit, um über den Auspuff 12 zu entweichen.

Bei geöffnetem Einlaß 8 kann die Strahlung 13 unmittelbar von dem Funkenplasma aus durch den Verbindungsraum 5 hindurch auf den Spektralapparat 6 auftreffen.

Nach Beendigung des Abfunkvorganges wird das Absperrorgan 9 zum druckdichten Schließen des Einlasses 8 betätigt. Der Gasfluß zwischen der Probe 10 und der Gegenelektrode 11 kommt zum Stillstand. Das über die Zuleitung 4 zugeführte Gas strömt allerdings weiter in den Verbindungsraum 5, bis der Druck in dem Verbindungsraum 5 mit dem Druck in dem Gaseinlaß 1 identisch ist. In dem Gassystem, insbesondere auch in dem Verbindungsraum 5, befindet sich dann ein mit hohem Spüldruck gespeichertes Spülgasvolumen. Der Spüldruck stellt sich bereits wenige Sekunden nach Verschließen des Einlasses 8 ein. Von diesem Zeitpunkt an wird in der sich anschließenden Bereitschaftszeit bis unmittelbar vor dem nächstfolgenden Abfunkvorgang kein Gas mehr verbraucht.

Vor Beginn des nächsten Abfunkvorgangs wird der Einlaß 8 durch Betätigung des Absperrorgans schlagartig freigegeben, so daß das in dem Verbindungsraum 5 gespeicherte Spülgasvolumen explosionsartig in den sich unmittelbar anschließenden Abfunkbereich der Kammer 7 strömt und den Innenraum der Kammer 7 so vollständig von Abbrandrückständen und etwaigen Luftanteilen reinigt. Sobald das Spülgasvolumen abgeflossen ist, stellt sich die übliche kontinuierlich während des Abfunkvorganges wirkende Gasströmung mit vorgegebener Strömungsgeschwindigkeit ein. Es wird erneut Funkenplasma gebildet und die sich ergebende Strahlung 13 im Spektralapparat 6 ausgewertet.

## Patentansprüche

1. Verfahren für die optische Funkenemissionsspektrometrie, bei dem in einer Abfunkkammer ein Funkenplasma von einer Probe erzeugt und mittels eines mit der Abfunkkammer über einen Verbindungsraum insbesondere optisch verbundenen Spektralapparates spektralanalytisch ausgewertet wird, wobei der Verbindungsraum und die Abfunkkammer während eines Abfunkvorganges kontinuierlich über eine Gaszuleitung von einem Schutzgas durchströmt werden, so daß die Strahlung des Funkenplasmas zum Spektralapparat in reiner Schutzgasatmosphäre stattfindet, dadurch **gekennzeichnet**, daß in dem Gassystem vor der Abfunkkammer ein Spüldruck aufgebaut und z.B. vor Beginn des nächstfolgenden Abfunkvorgangs zum Spülen der Abfunkkammer schlagartig freigegeben wird, so daß das Spülgasvolumen die Abfunkkammer impulsartig durchflutet.

2. Verfahren nach Anspruch 1, dadurch **gekennzeichnet**, daß die Gasströmung in der Bereitschaftszeit mit Ausnahme etwaiger Spülgasströme unterbrochen ist.

3. Verfahren nach Anspruch 1 oder 2, dadurch **gekennzeichnet**, daß der Spüldruck in einer Nebenleitung der Gaszuleitung herrscht und über diese Nebenleitung auf die Abfunkkammer wirksam wird.

4. Vorrichtung zur Durchführung des Verfahrens nach Anspruch 1, 2 oder 3 mit einer Abfunkkammer (7), in der ein Funkenplasma von einer Probe (10) erzeugt wird, einem mit der Abfunkkammer über einen Verbindungsraum (5) insbesondere optisch verbundenen Spektralapparat (6) und einer Gaszuleitung (4), um den Verbindungsraum und die Abfunkkammer während eines Abfunkvorganges kontinuierlich von einem Schutzgas zu durchströmen, dadurch **gekennzeichnet**, daß die Abfunkkammer (7) mit einem Einlaß (8) für das Spülgas und für die während eines Abfunkvorganges kontinuierliche Schutzgasströmung versehen ist, welcher Einlaß (8) mittels eines schlagartig zu öffnenden Absperrorgans (9) gasdicht verschließbar ist.

5. Vorrichtung nach Anspruch 4, dadurch **gekennzeichnet**, daß für das Spülgas eine Nebenleitung an die Abfunkkammer (7) angeschlossen ist und jeweils ein Einlaß und ein Absperrorgan für das Spülgas und für die kontinuierliche Gasströmung vorgesehen sind, die gleichzeitig zu betätigen sind.

6. Vorrichtung nach Anspruch 4 oder 5, dadurch **gekennzeichnet**, daß die Lage und Größe des Einlasses (8) für das Spülgas sowie die innere Form der Abfunkkammer (7) so gewählt sind, daß der Gasspülstrom den Kammerinnenraum vollständig ausfüllt und etwaige Ablagerungen auf der Kammerinnenwandung sowie etwaige Luftanteile durch den Gasspülstrom erfaßt und entfernt werden.

7. Vorrichtung nach Anspruch 4, 5 oder 6 dadurch **gekennzeichnet**, daß der Einlaß (8) für die während eines Abfunkvorgangs kontinuierliche Gasströmung in die Abfunkkammer (7) mit der Öffnung für den Strahlengang (13) zwischen der Abfunkkammer (7) und dem Spektralapparat (6) identisch ist.

## Claims

1. Procedure for optical spark-emission spectrometry, in which a spark plasma is produced from a specimen in a spark chamber and is analysed spectrometrically by means of a spectroscopic instrument connected, especially optically, to the spark chamber via a connecting space, the connecting space and the spark chamber being traversed continuously by an inert gas via a gas feed pipe during a sparking operation, so that the radiation from the spark plasma to the spectroscopic instrument takes place in a pure protective atmosphere, characterised in that a scavenging pressure is built up in the gas system in front of the spark chamber and is released suddenly, e.g. prior to the next sparking operation, for scavenging the spark chamber, so that the scavenging gas volume flows in pulses through the spark chamber.

2. Procedure according to claim 1, characterised in that the gas flow is interrupted during the stand-by period, with the exception of any scavenging gas currents.

3. Procedure according to claim 1 or claim 2, characterised in that the scavenging pressure prevails in a by-pass of the gas feed pipe and acts on the spark chamber via this by-pass.

4. Equipment for carrying out the procedure according to claim 1, 2 or 3, comprising a spark chamber (7) in which a spark plasma is produced from a specimen (10), a spectroscopic instrument (6) connected, especially optically, to the spark chamber via a connecting space (5), and a gas feed pipe (4) in order to pass an inert gas continuously through the connecting space and the spark chamber during a sparking operation, characterised in that the spark chamber (7) is provided with an inlet (8) for the scavenging gas and for the continuous inert gas flow during a sparking operation, wherein said inlet (8) can be closed in a gastight manner by means of a shut-off member (9) to be opened suddenly.

5. Equipment according to claim 4, characterised in that a by-pass is connected to the spark chamber (7) for the scavenging gas and an inlet and a shut-off member are provided for the scavenging gas and for the continuous gas flow, these being actuated simultaneously.

6. Equipment according to claim 4 or claim 5, characterised in that the position and dimensions of the inlet (8) for the scavenging gas and the internal shape of the spark chamber (7) are selected in such a manner that the scavenging gas current completely fills the interior of the chamber and any deposits on the inner wall of the chamber and any air fractions are detected and removed by the scavenging gas current.

7. Equipment according to claim 4, 5 or 6, characterised in that the inlet (8) for the continuous gas flow into the spark chamber (7) during a sparking operation is identical with the opening for the optical path (13) between the spark chamber (7) and the spectroscopic instrument (6).

## Revendications

1. Procédé pour la spectrométrie d'émission optique à étincelles dans lequel un plasma d'étincelles est produit dans une chambre à étincelles à partir d'un échantillon et est évalué de manière spectroscopique au moyen d'un spectroscope relié à la chambre d'étincelles par un espace de liaison, en particulier relié optiquement, l'espace de liaison et la chambre d'étincelles étant traversés continuellement pendant une opération d'émission d'étincelles par un gaz protecteur qui passe par une conduite d'amenée de gaz de telle manière que le rayonnement du plasma d'étincelles vers le spectroscope a lieu dans une atmosphère de gaz protecteur pur, caractérisé en ce qu'une pression de balayage se constitue dans le système de gaz devant la chambre à étincelles et est débloquée brusquement, par exemple avant le début de la prochaine opération d'émission d'étincelles pour balayer la chambre à étincelles si bien que le volume de gaz de balayage s'écoule à travers la chambre à étincelles de manière impulsionnelle.

2. Procédé selon la revendication 1, caractérisé en ce que l'écoulement de gaz est interrompu pendant la période d'attente à l'exception de flux de gaz de balayage éventuels.

3. Procédé selon la revendication 1 ou 2, caractérisé en ce que le gaz de balayage règne dans une conduite secondaire de la conduite d'amenée de gaz et est efficace sur la chambre à étincelles par cette conduite secondaire.

4. Dispositif pour réaliser le procédé selon la revendication 1, 2 ou 3 avec une chambre à étincelles (7), dans laquelle un plasma d'étincelles est produit à partir d'un échantillon (10), avec un spectroscope (6) relié à la chambre à étincelles par un espace de liaison (5), en particulier relié de manière optique, et avec une conduite d'amenée de gaz (4) pour faire traverser l'espace de liaison et la chambre à étincelles continuellement pendant uen opération d'émission d'étincelles par un gaz protecteur, caractérisé en ce que la chambre à étincelles (7) est pourvue d'une entrée (8) pour le gaz de balayage et pour l'écoulement continu de gaz protecteur pendant une opération d'émission d'étincelles, entrée (8) qui peut être obturée en étant étanche au gaz au moyen d'un organe d'arrêt (9) à ouvrir brusquement.

5. Dispositif selon la revendication 4, caractérisé en ce qu'une conduite secondaire pour le gaz de balayage est raccordée à la chambre à étincelles (7) et qu'une entrée et un organe d'arrêt sont prévus respectivement pour le gaz de balayage et pour l'écoulement continu de gaz qui sont à actionner simultanément.

6. Dispositif selon la revendication 4 ou 5, caractérisé en ce que la position et la taille de l'entrée (8) pour le gaz de balayage ainsi que la forme intérieure de la chambre à étincelles (7) sont sélectionnées de telle manière que le flux de gaz de balayage remplit entièrement l'intérieur de la chambre et que des dépôts éventuels sur la paroi intérieure de la chambre ainsi que des fractions d'air éventuelles sont détectées et enlevées par le flux de gaz de balayage.

7. Dispositif selon la revendication 4, 5 ou 6, caractérisé en ce que l'entrée (8) pour le flux de gaz continu dans la chambre à étincelles (7) pendant une opération d'émission d'étincelles est. identique à l'ouverture pour la marche des rayons (13) entre la chambre à étincelles (7) et le spectroscope (6).
